# FASCICULE DE BREVET EUROPEEN

(11) **EP 1 683 679 B1**
(45) Date de publication et mention de la délivrance du brevet: **01.07.2015**
(21) Numéro de dépôt: 05022048.2
(22) Date de dépôt: 10.10.2005
(51) Int. Cl.: B60R 9/045

(54) **Dispositif de fixation pour fixer une barre transversale**
Befestigungsvorrichtung zum Befestigen einer Querstange
Fixing device for fixing a crossbar

(30) Priorité: 21.12.2004 FR 0413678
(43) Date de publication de la demande: 26.07.2006
(73) Titulaire: Scambia Holdings Cyprus Limited, 3106 Limassol (CY)
(72) Inventeur: Poulet, Serge, 77170 Brie Comte Robert (FR)
(74) Mandataire: Hoeger, Stellrecht & Partner Patentanwälte

(56) Documents cités:
- EP-A- 0 681 943
- EP-A- 0 894 672
- US-A- 5 492 258
- US-A- 5 588 572

## Description

L'invention concerne un dispositif de fixation selon le préambule de la revendication 1 et donc, plus en détail, un dispositif de fixation pour fixer une barre transversale de façon détachable à une barre longitudinale d'une galerie de toit d'un véhicule automobile.

Le document EP 0 894 672 A révèle un porte-charge pour un véhicule automobile équipé d'une galerie de toit. La galerie de toit a deux barres longitudinales. Le porte-charge comprend au moins une barre transversale et, à chaque extrémité de celle-ci, un dispositif de fixation pour fixer de façon détachable la barre transversale à la barre longitudinale respective. Chaque dispositif de fixation comporte une paire de mâchoires et une vis de serrage pour serrer les deux mâchoires contre des côtés opposés de la barre longitudinale. Ces dispositifs de fixation ont les inconvénients qu'il faut un outil pour serrer ou desserrer la vis de serrage et qu'il prend relativement beaucoup de temps pour tourner la vis lors du serrage et desserrage.

Le document EP 0 681 943 A révèle des dispositifs de fixation pour fixer des barres transversales à des barres longitudinales d'une galerie de toit d'un véhicule automobile. Chaque dispositif de fixation comprend un support avec un boîtier pouvant être fixé sur la barre transversale, une mâchoire d'appui immobile par rapport au support et une mâchoire de serrage pouvant être pivoté autour d'un axe par rapport du support. Le dispositif de fixation comporte en plus un levier coudé servant comme manette. Cette manette est reliée à l'aide d'un levier intermédiaire, un levier de positionnement, une éclisse et plusieurs tourillons à la mâchoire de serrage. Ce dispositif de fixation a les inconvénients qu'il comporte un assez grand nombre d'éléments mobiles pour relier la manette à la mâchoire de serrage et est par conséquence relativement coûteux ainsi que sujet à des pannes.

Le document US 5 492 258 révèle un dispositif de fixation pour fixer une barre transversale de façon détachable à une barre longitudinale d'une galerie de toit d'un véhicule automobile. Un support (élément de base) est fixé à un tube formant la partie principale de la barre transversale et présente une mâchoire d'appui. Une manette et un organe de raccord (organe de transmission) sont supportés du support de façon pivotante autour d'un axe commun. Une mâchoire de serrage est supportée de façon pivotante autour d'un axe de mâchoire qui est défini par un tourillon tenu par l'organe de raccord. Une came est reliée de façon fixe à la manette et peut coopérer avec une surface portante de la mâchoire de serrage de sorte que la dernière peut être pivotée en pivotant la manette. L'organe de raccord tient un écrou. Le support supporte une vis qui peut être tournée et coopère avec l'écrou de sorte que l'organe de raccord peut être pivoté et que la position de l'axe de mâchoire peut être déplacée relatif au support. L'écrou est apparemment tenu de manière à ce qu'il puisse être pivoté relatif à l'organe de raccord si celui-ci est pivoté. L'écrou et la vis doivent en plus être tenus de façon que la distance entre l'axe de la vis et l'axe du tourillon supportant l'organe de raccord puisse être variée si l'organe de raccord est pivoté pour ajuster l'axe de mâchoire. Ce dispositif de fixation a donc l'inconvénient qu'il nécessite un écrou ainsi qu'une vis mobiles en plus de l'organe de raccord et possède en conséquence relativement beaucoup d'éléments. Le fait que la mâchoire de serrage est supportée de façon mobile par l'organe de raccord qui est à son tour supporté de façon mobile peut en outre réduire la robustesse du dispositif de fixation et la stabilité du serrage de la barre transversale. Comme le dispositif connu ne comporte aucun ressort, il a en plus l'inconvénient que la position de l'axe de mâchoire doit être ajustée très précisément.

La présente invention a pour but de fournir un dispositif de fixation amélioré qui permet d'éviter des inconvénients des dispositifs de fixation connus. Plus en détail, il est désiré que le dispositif de fixation permette de fixer ou détacher la barre transversale rapidement sans outil, que le dispositif de fixation soit quand même simple, robuste et durable, ne possède en particulier que peu d'éléments mobiles et puisse être produit avec peu de frais.

Selon l'invention, ce but et atteint par un dispositif de fixation tel que défini dans la revendication 1.

Des perfectionnements avantageux du dispositif de fixation ressortent des revendications dépendantes.

Par exemple, le dispositif est avantageusement encore caractérisé en ce qu'un tourillon de manette reliant la manette de façon pivotante à l'organe de raccord et/ou l'organe de raccord et/ou la manette est guidé par le support de manière à ce que l'axe de manette fait, par rapport au support, un déplacement avec une composante parallèle à une ligne droite reliant l'axe de manette à l'axe de raccord lorsque la manette est pivotée d'une position desserrée dans une position serré ou vice versa.

Dans une forme préférée de réalisation, le dispositif est aussi caractérisé en ce que l'axe de manette est déplacé par rapport au support de manière à ce que la distance entre l'axe de manette et l'axe de mâchoire soit variée lorsque la manette est pivotée d'une position desserrée dans une position serrée ou vice versa.

De préférence, le dispositif et en plus caractérisé en ce que la mâchoire de serrage supporte un tourillon de raccord qui définit l'axe de raccord et que l'organe de raccord comprend un boulon de raccord fixé au tourillon de raccord.

Avantageusement le dispositif est alors aussi caractérisé en ce que les moyens de ressort comportent un ressort cylindrique de compression qui est disposé sur le boulon de raccord, entoure une section longitudinale de celui-ci et présente une première extrémité prenant appui via une rondelle ou autre pièce intermédiaire ou directement sur une surface du support ainsi qu'une deuxième extrémité pour appliquer une force de pression sur le tourillon de raccord.

Dans une forme préférée de réalisation, le dispositif est en plus caractérisé en ce que le tourillon de raccord comporte un trou transversal pourvu d'un filet intérieur, que la manette et reliée au boulon de raccord par un tourillon de manette définissant l'axe de manette, que le boulon de raccord est constitué par une vis de raccord qui possède un filet extérieur et une tête, que ledit filet extérieur est vissé dans le filet intérieur du trou transversal du tourillon de raccord et que le tête de la vis de raccord prend appui directement ou via une rondelle ou autre pièce intermédiaire sur une surface du tourillon de manette.

Avantageusement, le dispositif est encore caractérisé en ce que le boulon de raccord pénètre à travers un trou du support de manière à ce qu'il puisse être déplacé à peu près dans sa direction longitudinale et pivoté autour de l'axe de raccord.

De préférence, le dispositif est par surcroît caractérisé ce que la surface portante et la came sont formées et arrangées de façon pour que la manette passe un point mort quand la manette est pivotée d'une position desserrée dans une position serrée ou vice versa.

L'objet de l'invention est expliqué plus en détail ci-après à l'appui d'un exemple de réalisation représenté sur les dessins. Sur les dessins, les figures montrent:
- Fig. 1: une coupe verticale le long d'une barre transversale à travers un dispositif de fixation dans la position desserrée,
- Fig. 2: une coupe transversale à travers le dispositif de fixation suivant la ligne II - II de la fig. 1,
- Fig. 3: une coupe verticale du dispositif de fixation dans la position serrée,
- Fig. 4: une vue de dispositif de fixation suivant la flèche IV de la figure 3,
- Fig. 5: une coupe verticale de la coquille inférieure du support du dispositif de fixation,
- Fig. 6: une vue de dessus de la coquille inférieure,
- Fig. 7: une vue de face de la coquille inférieure,
- Fig. 8: une vue de la manette du dispositif de fixation à peu près du côté gauche de la fig. 1,
- Fig. 9: une vue de dessous de la coquille supérieure du support du dispositif de fixation,
- Fig. 10: une coupe verticale de la coquille supérieure,
- Fig. 11: une vue du tourillon de raccord
- Fig. 12: une coupe axiale du tourillon de raccord,
- Fig. 13: une coupe axiale du tourillon de manette du dispositif de fixation,
- Fig. 14: une vue du tourillon de manette,
- Fig. 15: une coupe schématique à travers la coquille supérieure et la vis de raccord du dispositif de fixation suivant les lignes XV - XV des figures 1 et 10 et
- Fig. 16: un détail de la fig. 3 dans une plus grande échelle.

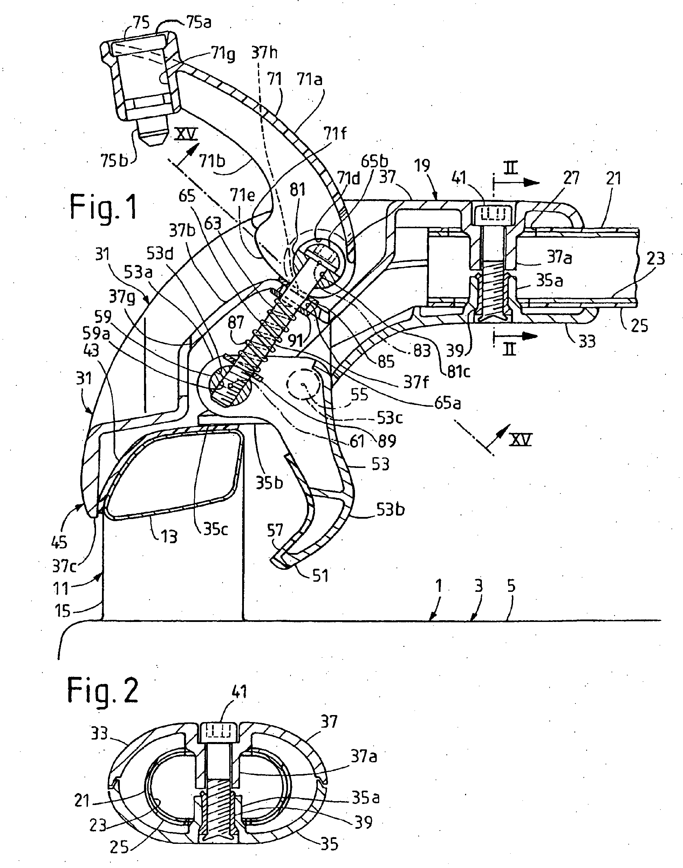

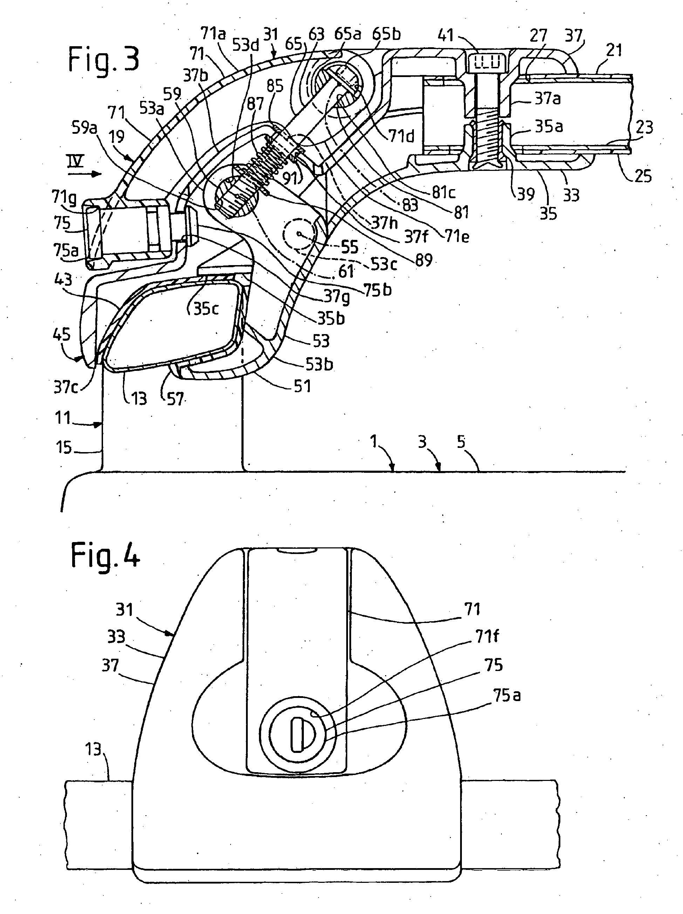

Un véhicule automobile 1 indiquée sur les figures 1 et 3 comporte un pavillon 3 avec un toit 5. Le véhicule automobile 1 est équipé d'une galerie de toit 11 qui comporte deux barres longitudinales 13 dont une est visible sur les figures 1, 3 et 4. Chacune des barres longitudinales 13 s'étend le long du véhicule automobile 1 à proximité d'un des bords longitudinaux du toit 5 et est pourvue de deux pieds 15 dont chacun est relié de façon fixe à une des extrémités de la barre longitudinale. Chaque barre longitudinale est fixée à l'aide des pieds 15 de façon immobile et en permanence au toit 5 de manière à ce qu'elle soit séparée du toit par une petite espace intermédiaire.

Un porte-charge 19 comporte au moins une barre transversale 21 et, de préférence, au moins deux barres transversales 21 dont une est visible sur les figures 1, 2 et 3. Chaque barre transversale 21 consiste essentiellement d'un profilé, tel qu'un tube, et présente, par exemple, une paroi intérieure 23 en métal et une paroi extérieure 25 ou couverture 25 en matière synthétique. La ou chaque barre transversale 21 est pourvue à proximité de chacune de ses extrémités d'un trou 27, à savoir d'un trou transversal et vertical. La ou chaque barre transversale 21 est équipée de deux dispositifs de fixation 31 dont chacun est arrangé à une des extrémités de la barre transversale. Ces dispositifs de fixation 31 permettent de fixer la barre transversale 21 de façon détachable aux barres longitudinales 13 de la galerie de toit 11. Si la ou une barre transversale 21 est fixée, elle est sensiblement perpendiculaire aux barres longitudinales et donc aussi perpendiculaire à la direction longitudinale du véhicule automobile.

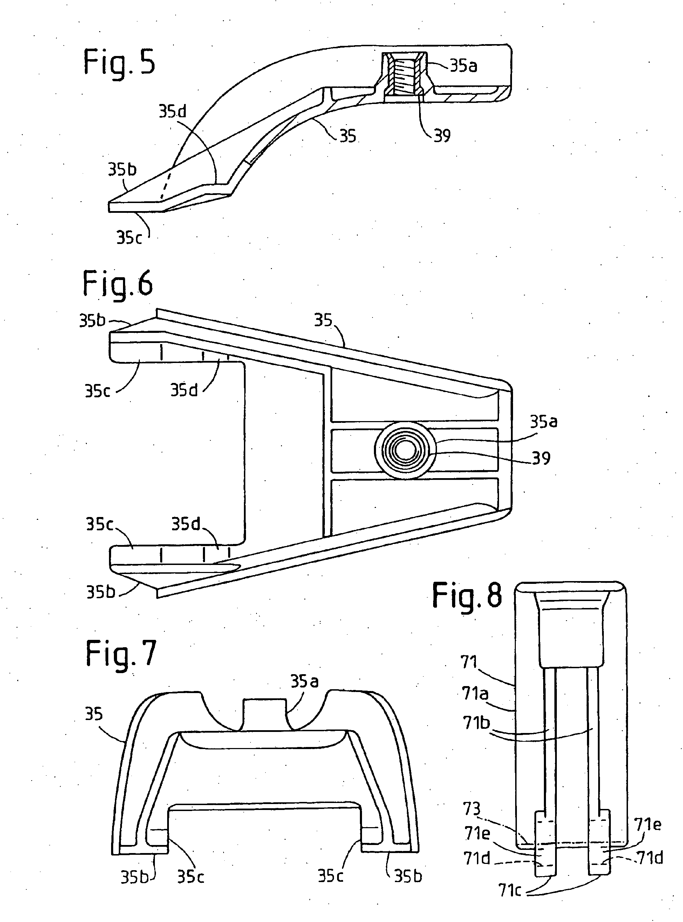

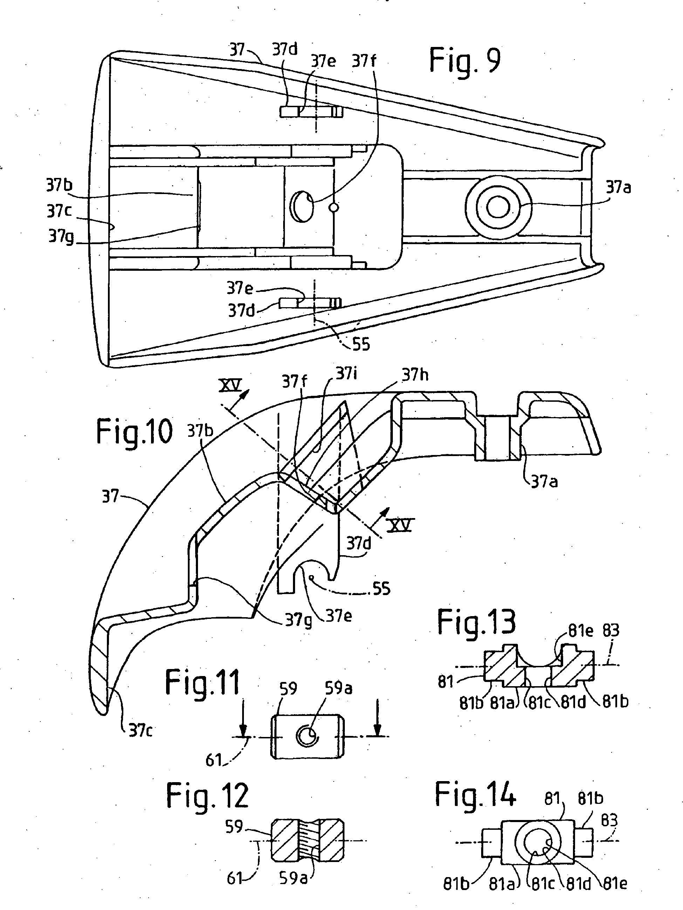

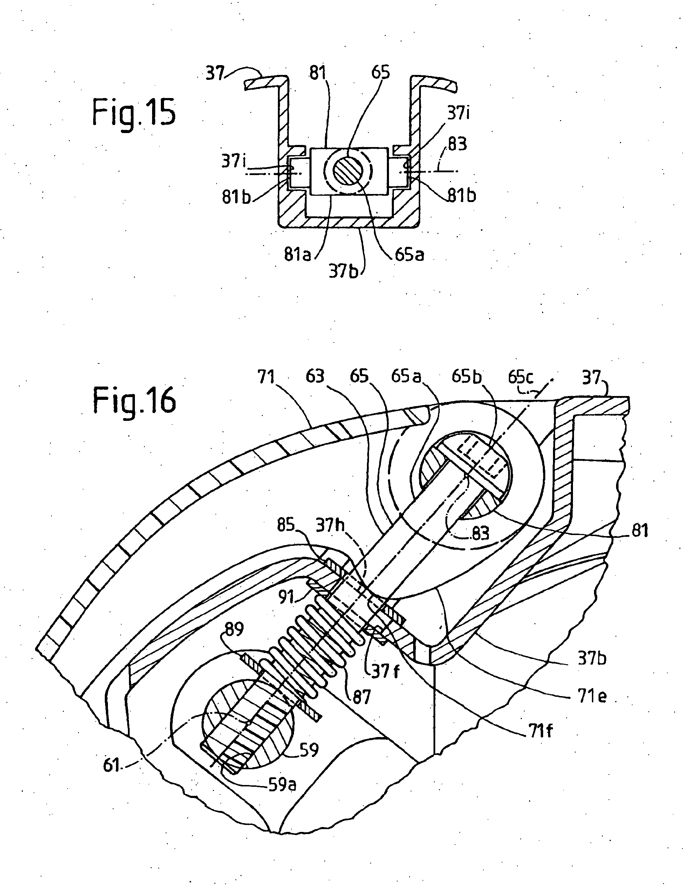

Chaque dispositif de fixation 31 comprend un support 33 qui est courbe et/ou coudé dans les coupes verticales qui sont représentées dans les figures 1 et 3 et s'étendent le long de la barre transversale 21. Le support 33 comprend, comme élément principal, un boîtier composé en deux coquilles, à savoir une coquille inférieure 35 représentée séparément sur les figures 5, 6, 7 et une coquille supérieure 37 représentée séparément sur les figures 9 et 10 et aussi visible en partie sur les figures 15 et 16. Chacune des coquilles 35, 37 comporte, comme partie principale, une paroi qui est en général courbe et/ou coudée dans les coupes représentées sur les figures 1 et 3 et forme la surface extérieure de la coquille. Les coquilles possèdent en plus plusieurs parties qui pénètrent vers l'intérieur du boîtier et seront, en partie, encore décrit plus en détail. La coquille inférieure 35 a un tenon 35a faisant saillie dans l'intérieur du boîtier vers le haut et pourvu d'un trou. Un douille 39 avec un filet intérieur et inséré dans le trou du tenon 35a et fixée dans celui-ci. La coquille supérieure 37 a un tenon 37a faisant saillie dans l'intérieur de la coquille vers le bas et pourvu d'un trou sans douille insérée et sans filet. Les deux tenons 35a, 37a pénètrent l'un vers l'autre dans le trou 27 de la barre transversale 21. Une vis 41 pénètre le trou du tenon 37a et est vissée de façon imperdable dans le filet de la douille 39 du tenon 35a. Le trou 27 de la barre transversale 21 est, par exemple, oblong dans la direction longitudinale de la barre transversale 21 et permet de déplacer le support 33 par rapport à la barre transversale dans la direction longitudinale de la barre transversale si la vis 41 est desserrée un peu. La distance des deux dispositifs de fixation peut donc être ajustée et adaptée à la distance des deux barres longitudinales 21 si la vis 41 d'au moins un des dispositifs de fixation est desserrée. Si la vis 41 d'un dispositif de fixation est serrée, elle serre les deux coquilles 35, 37 l'une contre l'autre ainsi que contre la barre transversale 21 de manière à ce que les deux coquilles 35, 37 soient reliées de façon rigide l'une à l'autre et à la barre transversale 21.

La paroi de la coquille inférieure 35 s'élargit vers son extrémité éloignée de la barre transversale 21 et possède - dans la vue de dessus représentée dans la fig. 6 - une section formant deux fourchons 35b qui font saillie vers ladite extrémité et sont séparés d'un creux. Chacun des deux fourchons 35b présente une section d'appui 35c arrangée au côté qui est vis-à-vis de l'autre fourchon 35b.

La coquille supérieure 37 s'élargit vers son extrémité éloignée de la barre transversale 21 pareillement à la coquille inférieure 35. La paroi de la coquille supérieure possède une partie médiane 37b qui forme, au côté extérieur de la coquille, un creux oblong. Le fond de creux est formé par une section de paroi qui est coudée et/ou courbe dans les coupes représentées sur les figures 1, 3, 10 et 16. La coquille supérieure 37 comporte une section d'appui 37c qui est dirigée de la partie médiane 37b vers le bas et forme au moins une partie essentielle de l'extrémité de la coquille qui est éloignée de la barre transversale.

Le support 33 de chaque dispositif de fixations 31 comporte aussi une pièce de contact 43. Celle-ci est formée par une plaquette qui est courbe et/ou coudée dans les coupes représentées dans les figures 1 et 3. La pièce de contact 43 est, par exemple, fixée aux sections d'appui 35c et 37c des deux coquilles 35 et 37, respectivement. Les deux sections d'appui 35c et 37c et la pièce de contact 43 forment ensemble une mâchoire d'appui 45. Si une barre transversale 21 est arrangée sur les deux barres longitudinales 13, la pièce de contact 43 repose sur une surface au côté supérieur et sur une surface au côté extérieur de l'une des barres longitudinales 13.

La coquille supérieure 37 comprend encore deux doigts 37d dirigés vers le bas. Chacun de ces doigts 37d et pourvu à son extrémité inférieure libre d'une incision 37e. Si les deux coquilles 35, 37 sont jointes, les bouches des incisions 37e sont couvertes et plus ou moins fermés par une section d'arrêt 35d de la coquille inférieure 35.

Chaque dispositif de fixation 31 comporte une mâchoire de serrage 51 qui est supportée par le support 33 de façon mobile, à savoir de façon pivotante. La mâchoire de serrage 51 comprend un levier de serrage 53 qui est coudé et forme l'élément principal de la mâchoire de serrage 51. Le levier de serrage 53 comporte un premier bras 53a et un deuxième bras 53b qui est plus long que le premier bras 53a, est coudé par rapport à celui-ci et est encore soi-même coudé et/ou courbe. Le levier de serrage 53 présente en plus deux saillies qui sont en général cylindriques, saillissent aux côtés opposés du levier de serrage, consistent, par exemple, avec le reste du levier d'une seule pièce et forment ensemble un pivot de mâchoire 53c. Chacune des deux saillies formant le pivot de mâchoire 53c pénètre dans une des incisions 37e. Ces incisions 37e forment ensemble avec les sections d'arrêt 35d un palier de mâchoire qui définit ensemble avec le pivot de mâchoire 53c un axe de mâchoire 55.

La mâchoire de serrage 51 comporte encore une pièce de contact 57 qui est fixée au deuxième bras 33b du levier de serrage 53. La pièce de contact 57 consiste substantiellement d'une plaquette qui est courbe et/ou coudée dans les coupes représentées sur les figures 1 et 3. Si un dispositif de fixation 31 et dans la position serrée représentée sur la fig. 3, la pièce de contact 57 de la mâchoire de serrage 51 touche une surface au côté inférieur et une surface au côté intérieur d'une des barres longitudinales 13.

Le premier bras 53a du levier de serrage 53 de la mâchoire de serrage 51 a un trou 53d et supporte un tourillon de raccord 59 qui est logé de façon pivotante dans le trou 53d. Le tourillon de raccord 59 et dessiné séparément sur les figures 11, 12 et définit ensemble avec le trou 53d un axe de raccord 61 qui est parallèle à l'axe de mâchoire 55. Le tourillon de raccord 59 comprend un trou transversal 59a qui est perpendiculaire à l'axe de raccord 61, pénètre le tourillon et est pourvu d'un filet intérieur.

Chaque dispositif de fixation 31 comprend un organe de raccord 63 qui est oblong et comprend, comme élément principal et/ou comme élément unique, une vis de raccord 65. Celle-ci est visible sur les figures 1, 3, 15, 16 et a un boulon de raccord 65a, une tête 65b et un axe 65c, le dernier étant indiqué sur la fig. 16. Le boulon de raccord 65a possède un filet extérieur ainsi qu'une partie cylindrique et lisse sans filet disposée entre la tête 65b et le filet extérieur. Celui-ci est vissé dans le filet intérieur du trou transversal 59a du tourillon de raccord 59. La vis de raccord est donc fixée au tourillon de raccord 59 dans le trou transversal 59a de celui-ci. La partie lisse du boulon de raccord 65a pénètre à travers un trou 37f présent au fond du creux oblong de la partie médiane 37b de la coquille supérieure 37. Le trou 37f et la partie lisse du boulon de raccord 65a sont, par exemple, cylindriques. Le diamètre de la partie lisse du boulon de raccord 65a est pourtant distinctement plus petit que le diamètre du trou 37f de manière à ce que le boulon de raccord ait un grand jeu dans le trou 37f et puisse faire, dans le trou, des mouvements longitudinaux et aussi des mouvements transversaux.

Chaque dispositif de fixation 31 comprend en plus une manette 71 qui est visible sur les figures 1, 3 et représentée séparément sur la fig. 8. Comme il sera encore décrit plus en détail, la manette 71 peut être mue, à savoir pivotée et aussi déplacé un peu par rapport au support 33 de la position desserré représentée sur la fig. 1 dans la position serrée représentée sur la fig. 3. La manette 71 possède une paroi 71a qui est courbe dans les coupes représentés sur les figures 1 et 3. La manette 71 a deux nervures 71b qui s'étendent le long de la paroi 71a et ressautent de celle-ci. Les nervures 71b ont des oeillets 71c disposés a proximité de l'une des extrémités des nervures et de la manette complète. Chaque oeillet 71c est pourvu d'un trou 71d. Les trous 71d des deux oeillets sont alignés de manière à ce que les deux oeillets forment ensemble un palier. L'extrémité de chacune des deux nervures 71b présente une section de came. Les sections de came des deux nervures forment ensemble une came 71e. La came 71e consiste donc avec le reste de la manette d'une seule pièce et possède une surface de came qui est au moins en partie courbe dans les coupes représentées sur les figures 1 et 3. La came 71e présente une saillie avec un point culminant 71f et/ou une ligne culminante 71f. La manette comporte, à l'extrémité éloignée des oeillets 71c, une partie en forme d'une douille avec un trou 71f qui loge une serrure 75, par exemple, une serrure à clé. La serrure 75 comporte un boîtier 75a fixé dans le trou 71g et un verrou 75b. Si la manette et dans la position serrée représentée sur la fig. 3, le verrou 75b pénètre un trou 37g de la coquille supérieure 37.

La section de la partie médiane 37b de la coquille supérieure 37 qui entoure le trou 37f et forme les bords de celui-ci présente une surface supérieure qui sert comme surface portante 37h. Cette surface portante 37h est substantiellement plate ou - dans les coupes représentées sur les figures 1, 3, 10 et 16 - en partie ou entièrement un peu courbe et convexe. Le creux oblong formé par la partie médiane 37b de la coquille supérieure 37 a deux flancs, dont chacun est pourvu d'une rainure de guidage 37i comme il est visible notamment sur la fig. 15. La coupe schématique représentée dans la figure 15 et d'ailleurs perpendiculaire à la direction longitudinale des rainures de guidage 37i. Celles-ci sont droits et au moins approximativement parallèles à l'axe du trou 37f et aussi à l'axe 65c de la vis de raccord 65. Il y a noter dans ce contexte que la vis de raccord et son axe sont pivotés un peu lors de l'actionnement de la manette encore décrit plus en détail.

Chaque dispositif de fixation 31 comprend un tourillon de manette 81 qui est visible sur les figures 1, 3, 15, 16 et représenté séparément sur les figures 13, 14. Le tourillon de manette 81 a une section centrale 81a et deux sections d'extrémité 81b. La section centrale 81e est en général cylindrique et pénètre avec un petit jeu à travers les trous 71d des oeillets 71c de la manette 71. Les deux sections d'extrémité 81b du tourillon de manette 81 sont aussi au moins en général cylindriques et pénètrent avec un petit jeu dans les rainures de guidage 37i comme il est visible sur la fig. 15. Le tourillon de manette 81 et les trous 71d définissent un axe de manette 83 qui est parallèle aux axes 55 et 61. Le tourillon de manette 81 est guidé dans les rainures de guidage 37i et peut glisser le long de ces rainures. Par surcroît, le tourillon de manette peut être pivoté autour de son axe et donc autour de l'axe de manette 83 dans les rainures de guidage 37i par rapport à la coquille supérieure 37. La manette 71 peut être pivotée autour le tourillon de manette 81 et donc autour l'axe de manette 83. La section centrale 81a du tourillon de manette 81 a un trou transversal 81c qui est perpendiculaire à l'axe de manette 83, pénètre à travers le tourillon et a une partie cylindrique 81d ainsi qu'un élargissement 81e. La partie lisse du boulon de raccord 65a passe avec un petit jeu radial à travers la section cylindrique 81d du trou transversal 81c. La tête 65b de la vis de raccord 65 est logée dans l'élargissement 81e du trou transversal 81c du tourillon de manette 81 et prend appui directement ou éventuellement via une rondelle sur la surface plane du tourillon formée par le fond de l'élargissement 81e. Une rondelle 85 ou une autre pièce intermédiaire ayant un trou est arrangée sur le boulon de raccord 65a de la vis de raccord 65 entre la surface portante 37h de la coquille supérieure 37 et la section de came 71e de la manette 71.

Chaque dispositif de fixation comprend encore des moyens de ressort qui comportent au moins un ressort 87, à savoir un ressort cylindrique de compression 87 qui est disposé sur le boulon de raccord 65a de la vis de raccord 65 entre la partie médiane 37b de la coquille supérieure 37 et le tourillon de raccord 59. Le ressort 87 entoure une section longitudinale de boulon de raccord 65a et possède une première extrémité ainsi qu'une deuxième extrémité. La première extrémité du ressort prend appui via une rondelle 91 ou une autre pièce intermédiaire ayant un trou ou directement sur une section de surface du support 33, c'est à dire sur la section de surface de la partie médiane 37b qui entoure le trou 37f et est opposée à la surface portante 37h. La deuxième extrémité du ressort 87 prend appui via une rondelle 89 ou via une autre pièce intermédiaire ayant un trou ou directement sur une surface du tourillon de raccord 59. Le ressort 87 presse sur le tourillon de raccord 59 et applique donc une force de pression sur celui-ci. Cette force de pression à la tendance d'éloigner le tourillon de raccord de ladite section de surface de la coquille supérieure et est transmise par le boulon de raccord 65a en forme d'une force de traction sur le tourillon de manette 81 et sur la manette 71. Ceci a l'effet que la came 71e de la manette 71 est pressée contre la rondelle 85 et donc vers la surface portante 37h de la coquille supérieure 37 du support 33. La came 71e presse donc la rondelle 85 contre la surface portante 37h et prend appui via la rondelle 85 sur la surface portante 37h.

Les deux coquilles 35, 37 et le levier de serrage 53 consistent en une matière dure et rigide, par exemple en aluminium. Les pièces de contact 43, 57 consistent, de préférence, en une matière élastique et molle ou éventuellement mi-dure, par exemple en une matière synthétique élastique et/ou en caoutchouc. La manette 71 consiste en une matière dure et rigide, par exemple une matière synthétique.

Maintenant il est supposé qu'une personne a posé une barre transversale 21 équipée avec les deux dispositifs de fixation 31 sur les deux barres longitudinales 13 fixées au toit 5 du véhicule automobile 1 et que chacun de ces dispositifs de fixation se trouve dans la position desserrée représentée sur la fig. 1. La section d'extrémité de la manette 71 comprennent les oeillets 71c se trouve alors dans le creux oblong du support 33 formé par la partie médiane 37b de la coquille supérieure 37, tandis que l'autre extrémité de la manette et la partie médiane de la manette se trouvent en dehors dudit creux et donc en dehors du support 31. Dans la position représentée sur la fig. 1, la mâchoire d'appui 45 repose sur une des barres longitudinales 13. La mâchoire de serrage 51 est desserrée et écartée de la barre longitudinale.

Pour serrer un dispositif de fixation 31 à la barre longitudinale attribuée, une personne peur mouvoir, c'est à dire pivoter la manette 71 autour de l'axe de manette 83 dans la position serrée qui est représentée sur les figures 3, 4 et 16. Ce mouvement pivotant peut être effectué à la main et sans outil. La manette se trouve alors substantiellement entièrement dans le creux oblong formé par la partie médiane 37b de la coquille supérieure 37.

Lors du mouvement pivotant de la manette 71, la came 71e de la manette et naturellement aussi pivotée. La surface du bord de la came est configurée de manière à ce que l'axe de manette 83 est mû et déplacé par rapport au support 33 et éloigné de l'axe de raccord 61. Comme déjà mentionnée, le tourillon de manette 81 est guidé par les rainures de guidage 37i de la coquille supérieure 37. Les rainures de guidage 37i forment donc des moyens de guidage du support 33 et guident - via le tourillon de manette 81 - aussi la manette 71 et la partie de la vis de raccord 65 qui se trouve dans le trou 81c du tourillon de manette 81. La vis de raccord 65 est déplacée par le mouvement pivotant de la manette dans une direction qui est à peu près parallèle à l'axe 65c de la vis de raccord et donc aussi à peu près parallèle à une ligne droite qui relie l'axe de raccord 61 et l'axe de manette 71 et coïncide avec l'axe 65c de la vis de raccord. Le déplacement de la vis de raccord 65 cause un mouvement pivotant du tourillon de raccord 59 et de la mâchoire de serrage 51, autour l'axe de mâchoire 55 dans la position serrée.

A cause du mouvement pivotant de la mâchoire de serrage 51, la vis de raccord 65 est, en plus à son déplacement déjà mentionné, pivotée un petit peu autour l'axe de raccord 61 et autour l'axe de manette 83. La vis de raccord 65 fait donc, par rapport au support 33, un mouvement qui comprend un déplacement avec une composante parallèle à l'axe 65c de la vis de raccord 65 et, par surcroît, un petit mouvement pivotant. L'axe 65c de la vis de raccord est donc il-même mû lors des mouvements de la manette et de la mâchoire de serrage. Il soit aussi remarqué que la distance entre l'axe de manette 83 et l'axe de mâchoire 55 est variée lorsque la manette est pivotée de la position desserré dans la position serrée.

Les trois axes 55, 61, 83, le support 33 et en particulier la surface portante 37h du support ainsi que la came 71e de la manette 71 sont arrangés et formés de façon pour que la manette reste dans la position serrée après qu'elle fut pivotée dans cette position. Autrement dit, il est assuré par la formation et configuration du support 33, des trois axes 55, 61, 83 et la came 71e de la manette 71 que la dernière ne se bouge pas sans actionnement manuel de la manette de la position serrée dans une position plus ou moins desserrée. Plus en détail, le point culminant 71f et/ou la ligne culminante 71f de la came 71 passe à travers l'axe 65c de la vis de raccord 65 quand la manette 71 est pivotée de la position desserrée (fig. 1) dans la position serrée (figures 3 et 16). La manette 71e passe donc un point mort quand la manette est pivotée de la position desserrée dans la position serrée. Lorsque la mâchoire de serrage 51 se trouve dans la position serrée, elle peut encore être verrouillée en tournant le verrou 75b de la serrure 75 dans la position représentée sur la fig. 3.

Pour enlever la barre transversale une personne peut déverrouiller la serrure et pivoter la manette de la position desserrée dans la position serrée. Les mouvements des éléments mobiles sont alors inverses à ceux lors du serrage.

Chaque dispositif de fixation ne possède que relativement peu d'éléments mobiles, est robuste et durable et peu être produit avec peu de frais. Par surcroît, chaque dispositif de fixation peut être serré et desserré rapidement à la main et sans outil en pivotant la manette.

Les dispositifs de fixation peuvent naturellement être modifiés. L'organe de raccord pourrait, par exemple, comprendre un boulon et un écrou au lieu d'une vis ou éventuellement même deux ou plus de deux vis ou boulons et écrous. Les moyens de ressort pourraient alors comprendre plusieurs ressorts. Les rainures de guidage 37i pourraient être remplacées par des autres moyens du guidage pour guider le tourillon de manette 81 et/ou directement la manette 71 elle-même et/ou éventuellement l'organe de raccord. La came pourrait être faite d'un pièce séparée qui est reliée de façon rigide au reste de la manette.

## Revendications

1. Dispositif de fixation pour fixer une barre transversale (21) de façon détachable à une barre longitudinale (13) d'une galerie de toit (11) d'un véhicule automobile (1), avec un support (33), une mâchoire de serrage (51), une manette (71) et un organe de raccord (63), le support (33) étant destiné à être relié à la barre transversale (21) et présentant une mâchoire d'appui (45) et la manette (71) présentant une came (71e) et/ou étant reliée à une came et pouvant être pivotée pour pivoter la mâchoire de serrage (51), **caractérisé en ce que** le support (33) présente un palier de mâchoire pour définir un axe de mâchoire (55) et supporte la mâchoire de serrage (51) de façon pivotante autour de l'axe de mâchoire (55), que la mâchoire de serrage (51) supporte l'organe de raccord (63) de façon pivotante autour d'un axe de raccord (61) parallèle à l'axe de mâchoire (55), que l'organe de raccord (63) supporte la manette (71) de façon pivotante autour d'un axe de manette (83), que l'axe de manette (83) est déplaçable par rapport au support (33), que le support (33) présente une surface portante (37h) et que des moyens de ressort sont arrangés pour presser la came (71e) vers la surface portante (37h) du support (33).

2. Dispositif selon la revendication 1, **caractérisé en ce qu'**un tourillon de manette (81) reliant la manette (81) de façon pivotante à l'organe de raccord (63) et/ou l'organe de raccord (63) et/ou la manette (71) est guidé par le support (33) de manière à ce que l'axe de manette (83) fait, par rapport au support (33), un déplacement avec une composante parallèle à une ligne droite reliant l'axe de manette (83) à l'axe de raccord (61) lorsque la manette (71) est pivotée d'une position desserrée dans une position serré ou vice versa.

3. Dispositif selon la revendication 1 ou 2, **caractérisé en ce que** l'axe de manette (83) est déplacé par rapport au support (33) de manière à ce que la distance entre l'axe de manette (83) et l'axe de mâchoire (55) soit variée lorsque la manette (71) est pivotée d'une position desserrée dans une position serrée ou vice versa.

4. Dispositif selon l'une quelconque des revendications 1 à 3, **caractérisé en ce que** la mâchoire de serrage (51) supporte un tourillon de raccord (59) qui définit l'axe de raccord (61) et que l'organe de raccord (63) comprend un boulon de raccord (65a) fixé au tourillon de raccord (59).

5. Dispositif selon la revendication 4, **caractérisé en ce que** les moyens de ressort comportent un ressort cylindrique de compression (87) qui est disposé sur le boulon de raccord (65a), entoure une section longitudinale de celui-ci et présente une première extrémité prenant appui via une rondelle (91) ou autre pièce intermédiaire ou directement sur une surface du support (33) ainsi qu'une deuxième extrémité pour appliquer une force de pression sur le tourillon de raccord (59).

6. Dispositif selon la revendication 4 ou 5, **caractérisé en ce que** le tourillon de raccord (59) comporte un trou transversal (59a) pourvu d'un filet intérieur, que la manette (71) est reliée au boulon de raccord (65a) par un tourillon de manette (81) définissant l'axe de manette (83), que le boulon de raccord (65a) est constitué par une vis de raccord (65) qui possède un filet extérieur et une tête, que ledit filet extérieur est vissé dans le filet intérieur du trou transversal (59a) du tourillon de raccord (59) et que le tête (65b) de la vis de raccord (65) prend appui directement ou via une rondelle ou autre pièce intermédiaire sur une surface du tourillon de manette (81).

7. Dispositif selon l'une quelconque des revendications 4 à 6, **caractérisé en ce que** le boulon de raccord (65a) pénètre à travers un trou (37f) du support (33) de manière à ce qu'il puisse être déplacé à peu près dans sa direction longitudinale et pivoté autour de l'axe de raccord (61).

8. Dispositif selon l'une quelconque des revendications 1 à 7, **caractérisé en ce que** la surface portante (37h) et la came (71e) sont formée et arrangées de façon pour que la manette (71) passe un point mort quand la manette (71) est pivotée d'une position desserrée dans une position serrée ou vice versa.

## Patentansprüche

1. Befestigungsvorrichtung zum Befestigen einer Querstange (21) auf lösbare Weise an einer Längsstange (13) einer Dachreling (11) eines Kraftfahrzeugs (1), mit einem Träger (33), einer Spannbacke (51), einem Griffstück (71) und einem Verbindungsorgan (63), wobei der Träger (33) für die Verbindung mit der Querstange (21) bestimmt ist und eine Stützbacke (45) aufweist und wobei das Griffstück (71) eine Nocke (71e) aufweist und/oder mit einer Nocke verbunden ist und geschwenkt werden kann, um die Spannbacke (51) zu schwenken, **dadurch gekennzeichnet, dass** der Träger (33) ein Backenlager aufweist, um eine Backenachse (55) zu definieren, und die Spannbacke (51) um die Backenachse (55) herum schwenkbar trägt, dass die Spannbacke (51) das Verbindungsorgan (63) um eine Verbindungsachse (61), die zu der Backenachse (55) parallel ist, schwenkbar trägt, dass das Verbindungsorgan (63) das Griffstück (71) um eine Griffstückachse (83) schwenkbar trägt, dass die Griffstückachse (83) relativ zu dem Träger (33) bewegbar ist, dass der Träger (33) eine tragende Fläche (37h) aufweist und dass Federmittel eingerichtet sind, um die Nocke (71e) zu der tragenden Fläche (37h) des Trägers (33) hin zu drücken.

2. Vorrichtung nach Anspruch 1, **dadurch gekennzeichnet, dass** ein Griffstückzapfen (81), der das Griffstück (81) mit dem Verbindungsorgan (63) schwenkbar verbindet, und/oder das Verbindungsorgan (63) und/oder das Griffstück (71) durch den Träger (33) geführt wird, derart, dass die Griffstückachse (83), relativ zu dem Träger (33), eine Bewegung mit einer Komponente macht, die zu einer geraden Linie, welche die Griffstückachse (83) mit der Verbindungsachse (61) verbindet, parallel ist, wenn das Griffstück (71) aus einer gelösten Position in eine gespannte Position geschwenkt wird oder umgekehrt.

3. Verfahren nach Anspruch 1 oder 2, **dadurch gekennzeichnet, dass** die Griffstückachse (83) relativ zu dem Träger (33) bewegt wird, derart, dass der Abstand zwischen der Griffstückachse (83) und der Backenachse (55) verändert wird, wenn das Griffstück (71) aus einer gelösten Position in eine gespannte Position geschwenkt wird oder umgekehrt.

4. Vorrichtung nach einem der Ansprüche 1 bis 3, **dadurch gekennzeichnet, dass** die Spannbacke (51) einen Verbindungszapfen (59) trägt, der die Verbindungsachse (61) definiert, und dass das Verbindungsorgan (63) einen Verbindungsbolzen (65a) umfasst, der an dem Verbindungszapfen (59) befestigt ist.

5. Vorrichtung nach Anspruch 4, **dadurch gekennzeichnet, dass** die Federmittel eine zylindrische Druckfeder (87) aufweisen, die an dem Verbindungsbolzen (65a) angeordnet ist, einen Längsabschnitt von diesem umgibt und ein erstes Ende aufweist, das über eine Scheibe (91) oder ein anderes Zwischenstück oder direkt auf einer Fläche des Trägers (33) zur Abstützung kommt, sowie ein zweites Ende, um eine Druckkraft auf den Verbindungszapfen (59) aufzubringen.

6. Vorrichtung nach Anspruch 4 oder 5, **dadurch gekennzeichnet, dass** der Verbindungszapfen (59) ein quergerichtetes Loch (59a) aufweist, das mit einem Innengewinde versehen ist, dass das Griffstück (71) mit dem Verbindungsbolzen (65a) durch einen Griffstückzapfen (81) verbunden ist, der die Griffstückachse (83) definiert, dass der Verbindungsbolzen (65a) von einer Verbindungsschraube (65) gebildet ist, die ein Außengewinde und einen Kopf aufweist, dass das Außengewinde in dem Innengewinde des quergerichteten Lochs (59a) des Verbindungszapfens (59) verschraubt ist und dass der Kopf (65b) der Verbindungsschraube (65) direkt oder über eine Scheibe oder ein anderes Zwischenstück auf einer Fläche des Griffstückzapfens (81) zur Abstützung kommt.

7. Vorrichtung nach einem der Ansprüche 4 bis 6, **dadurch gekennzeichnet, dass** der Verbindungsbolzen (65a) durch ein Loch (37f) des Trägers (33) hindurch dringt, derart, dass er in etwa in seiner Längsrichtung bewegt werden und um die Verbindungsachse (61) herum geschwenkt werden kann.

8. Vorrichtung nach einem der Ansprüche 1 bis 7, **dadurch gekennzeichnet, dass** die tragende Fläche (37h) und die Nocke (71e) derart gebildet und eingerichtet sind, dass das Griffstück (71) einen Totpunkt passiert, wenn das Griffstück (71) aus einer gelösten Position in eine gespannte Position geschwenkt wird oder umgekehrt.

## Claims

1. A fixing device for fixing a transverse bar (21) detachably to a longitudinal bar (13) of a roof rack (11) of a motor vehicle (1), with a support (33), a clamping jaw (51), a handle (71) and a connecting member (63), the support (33) being intended to be connected to the transverse bar (21) and having a support jaw (45), and the handle (71) having a cam (71e) and/or being connected to a cam and being able to be pivoted in order to pivot the clamping jaw (51), **characterised in that** the support (33) has a jaw bearing for defining a jaw axis (55) and supports the clamping jaw (51) pivotally about the jaw axis (55), **in that** the clamping jaw (51) supports the connecting member (63) pivotally about a connection axis (61) parallel to the jaw axis (55), **in that** the connecting member (63) supports the handle (71) pivotally about a handle axis (83), **in that** the handle axis (83) is movable with respect to the support (33), **in that** the support (33) has a bearing surface (37h) and **in that** spring means are arranged to press the cam (71e) towards the bearing surface (37h) of the support (33).

2. A device according to claim 1, **characterised in that** a handle journal (81) connecting the handle (81) pivotally to the connecting member (63) and/or the connecting member (63) and/or the handle (71) is guided by the support (33) so that the handle axis (83) makes, with respect to the support (33), a movement with a component parallel to a straight line connecting the handle axis (83) to the connection axis (61) when the handle (71) is pivoted from an unclamped position into a clamped position or vice versa.

3. A device according to claim 1 or 2, **characterised in that** the handle axis (83) is moved with respect to the support (33) so that the distance between the handle axis (83) and the jaw axis (55) is varied when the handle (71) is pivoted from an unclamped position into a clamped position or vice versa.

4. A device according to any one of claims 1 to 3, **characterised in that** the clamping jaw (51) supports a connecting journal (59) that defines the connection axis (61) and **in that** the connecting member (63) comprises a connecting bolt (65a) fixed to the connecting journal (59).

5. A device according claim 4, **characterised in that** the spring means comprises a cylindrical compression spring (87) that is disposed on the connecting bolt (65a), surrounds a longitudinal section thereof and has a first end bearing via a washer (91) or other intermediate piece or directly on a surface of the support (33) as well as a second end for applying a pressure force to the connecting journal (59).

6. A device according to claim 4 or 5, **characterised in that** the connecting journal (59) comprises a transverse hole (59a) provided with an internal thread, **in that** the handle (71) is connected to the connecting bolt (65a) by a handle journal (81) defining the handle axis (83), **in that** the connecting bolt (65a) comprises a connecting screw (65) that has an external thread and a head, **in that** said external thread is screwed into the internal thread of the transverse hole (59a) of the connecting journal (59) and **in that** the head (65b) of the connecting screw (65) bears directly or via a washer or other intermediate piece on a surface of the handle journal (81).

7. A device according to any one of claims 4 to 6, **characterised in that** the connecting bolt (65a) enters through a hole (37f) in the support (33) so that it can be moved approximately in the longitudinal direction thereof and pivoted about the connecting axis (61).

8. A device according to any one of claims 1 to 7, **characterised in that** the bearing surface (37h) and the cam (71e) are formed and arranged so that the handle (71) passes a fulcrum when the handle (71) is pivoted from an unclamped position into a clamped position or vice versa.
